# EUROPÄISCHE PATENTSCHRIFT

(11) **EP 2 704 970 B1**
(45) Veröffentlichungstag und Bekanntmachung des Hinweises auf die Patenterteilung: **18.05.2016**
(21) Anmeldenummer: 12710222.6
(22) Anmeldetag: 19.03.2012
(51) Int. Cl.: B65G 47/84, B65G 54/02

(54) **ELEKTROMAGNETISCHES TRANSFERSYSTEM**
ELECTROMAGNETIC TRANSFER SYSTEM
SYSTÈME DE TRANSFERT ÉLECTROMAGNÉTIQUE

(30) Priorität: 03.05.2011 DE 102011075178
(43) Veröffentlichungstag der Anmeldung: 12.03.2014
(73) Patentinhaber: Robert Bosch GmbH, 70442 Stuttgart (DE)
(72) Erfinder: REINISCH, Martin, 73733 Esslingen (DE); VAN DE LOECHT, Heinrich, 76461 Muggensturm (DE)
(86) Internationale Anmeldenummer: PCT/EP2012/054819
(87) Internationale Veröffentlichungsnummer: WO 2012/150087

(56) Entgegenhaltungen:
- EP-A1- 1 123 886
- EP-A1- 1 300 351
- DE-A1-102008 040 204
- DE-A1-102009 029 314
- FR-A- 1 547 359
- US-A- 1 740 582
- US-A- 3 190 434
- US-A- 4 101 020
- US-A- 5 722 532

## Beschreibung

### Stand der Technik

Die Erfindung betrifft ein elektromagnetisches Transfersystem nach dem Oberbegriff des Anspruchs 1.

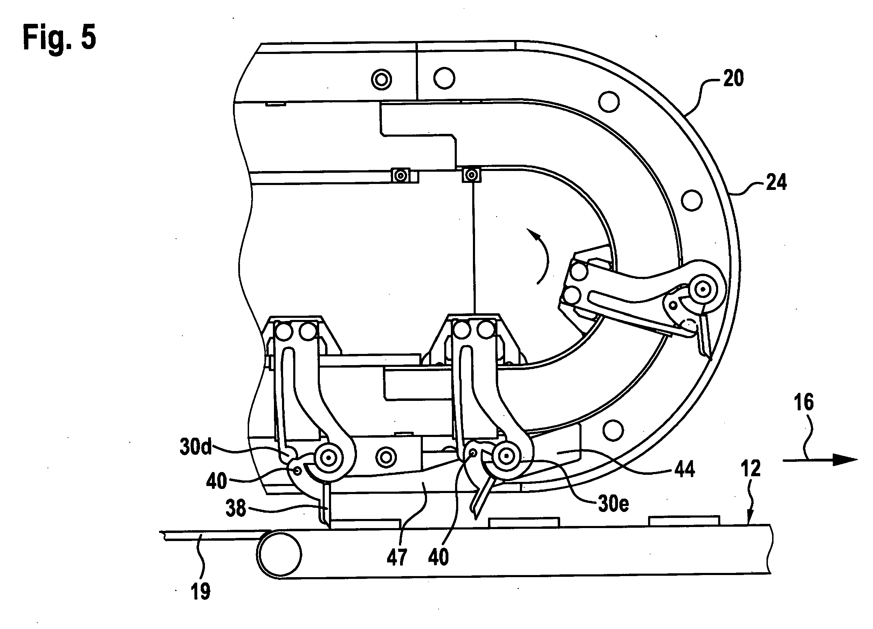

Ein derartiges Transfersystem ist aus der US 6,678,107 E2 bekannt. Das bekannte Transfersystem ist insbesondere zwischen einer beispielsweise Gegenstände in Form von Lebensmittelverpackungen zu fördernden ersten Fördereinrichtung und einer sich an das Transfersystem anschließenden zweiten Fördereinrichtung angeordnet. Mittels des Transfersystems können die einzelnen Gegenstände aus der ersten Fördereinrichtung übernommen und zum Beispiel in definierten Abständen zueinander an die zweite Fördereinrichtung abgegeben werden. Dies ist deshalb wichtig, da die zweite Fördereinrichtung beispielsweise die Gegenstände einer nachgeschalteten Verpackungsanlage zufördert, bei der es wichtig ist, dass die Gegenstände in einer bestimmten Anordnung bzw. in einem bestimmten gegenseitigen Abstand zueinander ankommen. Bei dem bekannten Transfersystem sind an der geschlossenen Trägerbahn Förderelemente mit Produktschiebern angeordnet, die jeweils einen Gegenstand aus der ersten Fördereinrichtung übernehmen und entlang einer Transportbahn an dem Transfersystem entlang fördern. Hierzu ist jedes Förderelemente individuell antreibbar, wozu im Förderelement angeordnete Permanentmagnetelemente im Zusammenhang mit an der Trägerbahn angeordneten, individuell ansteuerbaren Induktionsspulen dienen. Durch eine entsprechende Ansteuerung der Induktionsspulen können dabei beliebige Geschwindigkeitsprofile der Förderelemente erzielt werden. Bei dem bekannten Transfersystem ist es vorgesehen, dass die erste Fördereinrichtung gemäß Figur 5 der angesprochenen Schrift die Gegenstände in einer Richtung senkrecht zur Bewegungsrichtung der Förderelemente zufördert. Um Beschädigungen an den Gegenständen zu vermeiden, ist es daher erforderlich, dass die Förderelemente im Übergabebereich still stehen und nach Übergabe eines Gegenstandes aus der ersten Fördereinrichtung aus der Stillstandsposition verfahren werden. Ein derartiges Vorgehen erfordert einen relativ großen Abstand zwischen den einzelnen Gegenständen auf der ersten Fördereinrichtung, damit zum Abtransport des jeweiligen Gegenstandes aus dem Übergabebereich genügend Zeit verbleibt.

Darüber hinaus ist beispielsweise aus der DE10 2009 029 314 A1 ein Transfersystem bekannt, bei der sowohl die Zufördereinrichtung zum Transfersystem, als auch die nachgeordnete Fördereinrichtung in Bezug zur Bewegungsrichtung der Gegenstände parallel zum Förderweg der Gegenstände innerhalb des Transfersystems angeordnet sind. Bei diesem Transfersystem, das drehbar angeordnete Förderelemente aufweist, damit die Mitnehmer des jeweiligen Förderelements sich stets in Ausrichtung mit den Gegenständen befinden, ist der Übernahmebereich aus der Zufördereinrichtung bzw. der Übergabebereich an die nachgeordnete Fördereinrichtung jeweils in einem Kurvenbereich der Trägerbahn des Transfersystems angeordnet. DE 10 2008 040 204 A1 beschreibt ein gattungsgemäßes Transfersystem.

### Offenbarung der Erfindung

Ausgehend von dem dargestellten Stand der Technik liegt der Erfindung der Aufgabe zugrunde, ein elektromagnetisches Transfersystem nach dem Oberbegriff des Anspruchs 1 derart weiterzubilden, dass eine Übernahme der Gegenstände aus der Zufördereinrichtung bzw. eine Übergabe der Gegenstände an die nachgeordnete Fördereinrichtung entlang beliebiger Streckenabschnitte der Trägerbahn erfolgen kann. Diese Aufgabe wird erfindugsgemäß mit den Merkmalen des Anspruchs 1 gelöst. Das Transportelement am Förderelement ist zum in Wirkverbindung bringen und zum außer Wirkverbindung bringen mit dem wenigstens einen Gegenstand beweglich angeordnet wobei die Bewegung des Transportelements durch wenigstens ein an der Trägerbahn ortsfest angeordnetes Betätigungselement erfolgt. Mit anderen Worten gesagt bedeutet dies, dass über eine gezielte Bewegung des Transportelements am Förderelement das Transportelement an beliebiger Stelle der Förderstrecke mit dem jeweiligen Gegenstand in Wirkverbindung gebracht werden kann und an anderer, ebenfalls beliebiger Stelle, der Gegenstand an die nachgeschaltete Fördereinrichtung übergeben werden kann.

Vorteilhafte Weiterbildungen des elektromagnetischen Transfersystems sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In konstruktiv besonders einfach und zweckmäßiger Ausgestaltung ist es vorgesehen, dass das Betätigungselement schienenartig ausgebildet ist und zur Steuerung der Bewegung des Mitnehmerelements eine Führung ausbildet, die mit einem zumindest mittelbar am Mitnehmerelement angeordneten Führungszapfen zusammenwirkt. Dabei kann durch eine entsprechende Form der Führung eine Bewegung des Führungszapfens erzielt werden, die eine gezielte Bewegung des Transportelements am Förderelement ermöglicht.

Um eine sichere Anlage und Führung der Gegenstände zu Ermöglichen, auch wenn das Mitnahmeelement nicht durch das Betätigungselement geführt ist, wird erfindungsgemäß vorgeschlagen, dass das Mitnehmerelement schwenkbar am Förderelement angeordnet ist und ein Arretierelement aufweist, das das Mitnehmerelement in einer Förderstellung hält.

In besonders einfacher konstruktiver Ausbildung des Arretierelements ist dieses erfindungsgemäß als ein an einem Trägerelement angeordnetes Federelement ausgebildet. Dadurch kann insbesondere auf relativ teure bzw. aufwändige Bauteile, die ansonsten eine Arretierfunktion ermöglichen würden, wie beispielsweise schwenkbare Hebel, Federn oder ähnliches, verzichtet werden.

Besonders bevorzugt ist eine Ausgestaltung der Erfindung, bei der durch das Förderelement eine Bewegungskomponente in oder entgegen der Förderrichtung des wenigstens einen Gegenstands erzeugt wird. Dies ermöglicht es, die Produktteilungslänge zwischen zwei Gegenständen im Bereicht des Produktauslaufs aus der Transfereinrichtung zu verringern, ohne dass es dazu erforderlich ist, beispielsweise die Geschwindigkeit der Förderelemente zu erhöhen.

Um das Transfersystem einfach an unterschiedlichste Gegenstände bzw. Anwendungen anpassen zu können, ist das Trägerelement als Formatteil austauschbar an dem Förderelement angeordnet.

Durch die insbesondere schwenkbare Anordnung der Mitnehmerelemente an den Förderelementen ist es möglich, dass das Förderelement während der Förderung des wenigstens einen Gegenstands mit konstanter Geschwindigkeit bewegt wird, ohne dass es hierzu im Übergabebereich der Gegenstände an die nachgeordnete Fördereinrichtung, wenn diese im Bereich eines bogenförmigen Auslaufbereichs der Trägerbahn angeordnet ist, zu unerwünschten Beschleunigungen der Produkte kommt.

Ganz besonders bevorzugt ist eine Ausgestaltung der Erfindung, bei der eine dritte Fördereinrichtung zwischen den beiden Fördereinrichtungen vorgesehen ist, in deren Bereich die Mitnehmerelemente lediglich bereichsweise in Anlagekontakt mit den Gegenständen angeordnet sind. Dadurch können ein Anlagekontakt der Mitnehmerelemente mit den Gegenständen sowie ein Entfernen von den Gegenständen an beliebiger Stelle, insbesondere außerhalb des Einlaufbereichs und des Auslaufbereichs der Förderbahn, erfolgen. Insbesondere lassen sich dadurch auch die Abstände der Gegenstände vor der Übergabe an die nachgeordnete Fördereinrichtung besonders einfach beeinflussen.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Darstellung eines erfindungsgemäßen elektromagnetischen Transfersystems,
- Fig. 2 und 3: ein Förderelement mit daran angeordnetem, schwenkbarem Schieber in verschiedenen Positionen in Seitenansicht,
- Fig. 4: den Einlaufbereich der Gegenstände in das Transfersystem in Seitenansicht und
- Fig. 5: den Auslaufbereich der Gegenstände aus dem Transfersystem, ebenfalls in Seitenansicht.

Gleiche Bauteile bzw. Bauteile mit gleicher Funktion sind in den Figuren mit den gleichen Bezugsziffern versehen.

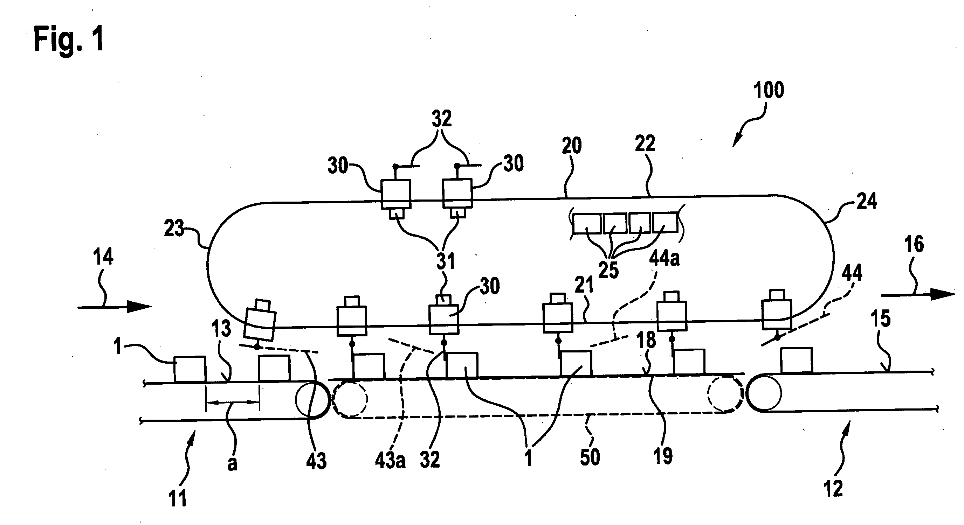

In der Fig. 1 ist ein erfindungsgemäßes elektromagnetisches Transfersystem 100 stark vereinfacht dargestellt. Das Transfersystem 100 dient dazu, Gegenstände 1, insbesondere Gegenstände 1 in der Nahrungsmittelindustrie, wie beispielweise stoßempfindliche Schokoriegel, Kekse oder ähnliches, die auf einer Zufördereinrichtung in Form einer ersten Fördereinrichtung 11 gefördert werden, an eine dem Transfersystem 100 nachgeschaltete zweite Fördereinrichtung 12 zu übergeben. Sowohl die erste Fördereinrichtung 11, als auch die zweite Fördereinrichtung 12 sind im dargestellten Ausführungsbeispiel jeweils als endlos umlaufende Förderbänder ausgebildet, wobei die erste Fördereinrichtung 11 entweder taktweise oder kontinuierlich betrieben wird, während die zweite Fördereinrichtung 12 vorzugsweise kontinuierlich angetrieben ist.

Ergänzend wird erwähnt, dass beide Fördereinrichtungen 11, 12 auch andersartig ausgebildet sein können, da deren genaue Ausbildung nicht erfindungswesentlich ist.

Die erste Fördereinrichtung 11 bildet mit deren Oberseite eine erste Förderebene 13 aus, auf der die Gegenstände 1 in einem gegenseitigen Abstand a zueinander in Richtung des Pfeils 14 gefördert werden. Die zweite Fördereinrichtung 12 bildet mit deren Oberseite eine zweite Förderebene 15 aus, auf der die Gegenstände 1 in Richtung des Pfeils 16 gefördert werden. Das Transfersystem 100 weist eine ebene Förderstrecke 18 in Form eines Rutschbleches 19 auf, wobei die Förderebenen 13, 15 und die Förderstrecke 18 eine gemeinsame, ebene, vorzugsweise spaltfreie Oberfläche ausbilden und zueinander fluchtend ausgerichtet sind.

Das Transfersystem 100 weist eine geschlossene Trägerbahn 20 auf, die im dargestellten Ausführungsbeispiel in einer senkrechten Ebene ovalförmig ausgebildet ist. Hierbei besteht die Trägerbahn 20 aus zwei zueinander parallel angeordneten, geraden Trägerbahnabschnitten 21, 22, die über einen halbkreisförmigen Einlaufbereich 23 sowie einen Auslaufbereich 24 miteinander verbunden sind. Im Einlaufbereich 23, der bis in die erste Förderebene 13 der ersten Fördereinrichtung 11 hineinreicht, werden die Gegenstände 1 von der ersten Fördereinrichtung 11 übernommen und auf die Förderstrecke 18 (Rutschblech 19) übergeben. Ebenso reicht der Auslaufbereich 24 bis in den Bereich der zweiten Förderebene 15 der zweiten Fördereinrichtung 12, wobei in dem Auslaufbereich 24 die Gegenstände 1 von der Förderstrecke 18 (Rutschblech 19) an die zweite Fördereinrichtung 12 übergeben werden.

Entlang der gesamten Trägerbahn 20 sind individuell ansteuerbare Induktionsspulen 25 angeordnet, wobei in der Fig. 1 die Anordnung der Induktionsspulen 25 lediglich ausschnittsweise und stark vereinfacht dargestellt ist. Die Induktionsspulen 25 dienen zum Antreiben von auf der Trägerbahn 20 beweglich angeordneten Förderelementen 30. Hierzu sind die Förderelemente 30 auf nicht dargestellte Art und Weise, beispielsweise mittels Rollen, längsverschiebbar entlang der Trägerbahn 20 angeordnet.

Jedes der Förderelemente 30 weist wenigstens ein, in Wirkverbindung mit den Induktionsspulen 25 angeordnetes Permanentmagnetelement 31 auf. Die Bewegung der Förderelemente 30 entlang der Trägerbahn 20 wird in bekannter Art und Weise durch individuelle Ansteuerung bzw. Bestromung der Induktionsspulen 25 erreicht, so dass beispielsweise die in Förderrichtung vor dem jeweiligen Förderelement 30 angeordnete Induktionsspule 20 auf das Permanentmagnetelement 31 des Förderelements 30 eine anziehende Wirkung ausübt, während beispielsweise durch eine entsprechende Bestromung der in Förderrichtung jeweils nachgeordneten Induktionsspule 25 eine entsprechend abstoßende Wirkung auf das Permanentmagnetelement 31 erzielt wird, so dass sich das Förderelement 30 in nahezu beliebiger Art mit beliebigen Bewegungsgesetzen bzw. Geschwindigkeitsprofilen (beispielsweise nach einem Polynom 5-ter oder 7-ter Ordnung oder gemäß einer Sinus²-Funktion) beschleunigen, stoppen oder kontinuierlich bewegen lässt. Hierzu weist das Transfersystem 100 weiterhin an jedem der Förderelemente 30 sowie im Bereich der Trägerbahn 20 nicht dargestellte Positionserkennungsmittel (zum Beispiel auf Basis des Hall-Prinzips) auf, so dass die Position jedes Förderelements 30 ermittelt werden kann und der Steuereinrichtung des Transfersystems 100 bekannt ist.

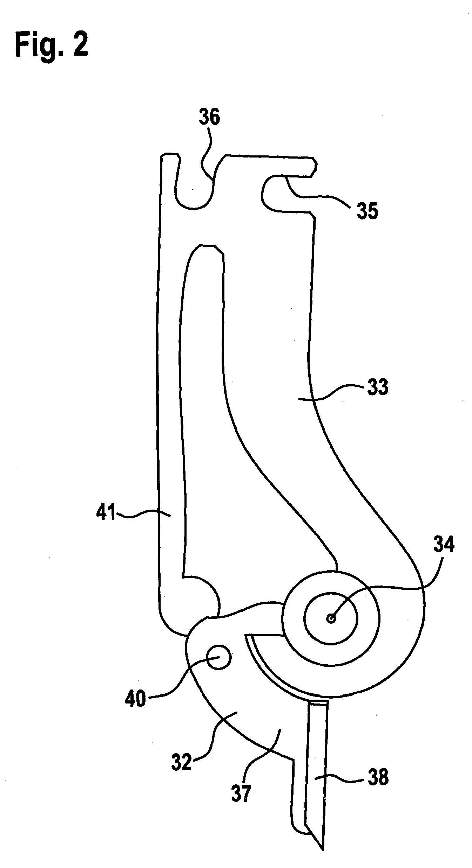

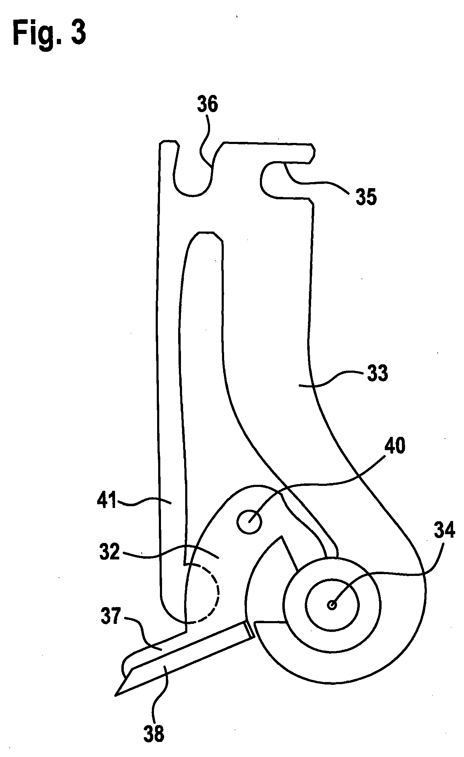

Jedes der Förderelemente 30 weist einen schwenkbar gelagerten Mitnehmer 32 auf. Hierzu ist der Mitnehmer 32 an einem in den Fig. 2 und 3 erkennbaren Trägerelement 33 in einer Achse 34 drehbar gelagert, wobei das Trägerelement 33 über im Ausführungsbeispiel zwei Aufnahmeöffnungen 35, 36 zur Formatanpassung austauschbar am Förderelement 30 in Art eines Bajonett-Verschlusses befestigt ist.

Der Mitnehmer 32 umfasst einen Hebel 37, an dem eine Mitnehmerplatte 38 befestigt ist, die zum Transport bzw. zum Schieben eines Gegenstands 1 auf der Förderstrecke 18 (Rutschblech 19) in Anlagekontakt mit dem jeweiligen Gegenstand 1 angeordnet ist. Ferner ist an dem Hebel 37 ein Führungszapfen 40 befestigt, der im Ausführungsbeispiel einen runden Querschnitt aufweist und senkrecht zur Zeichenebene der Fig. 2 und 3 verläuft. Am Trägerelement 33 ist weiterhin ein elastisch biegbares Federelement 41 angeformt, über das der Hebel 37 bzw. die Mitnehmerplatte 38 in der in der Fig. 2 dargestellten Förderposition gehalten wird, solange eine bestimmte Kraft entgegen der Förderrichtung des Gegenstands 1 nicht überschritten wird. In der Fig. 3 ist demgegenüber der Zustand dargestellt, bei der sich der Hebel 37 in einer zurückgeklappten Position befindet. Diese Position wird eingenommen, solange mittels des Förderelements 30 kein Gegenstand 1 gefördert wird. In der Fig. 2 wirkt das Federelement 41 daher als Arretier- bzw. Anschlagelement für den Hebel 37.

Die Bewegung des Hebels 37 bzw. der Mitnehmerplatte 38 wird mittels entlang der Trägerbahn 20 im Bereich der Förderstrecke 18 ortsfest angeordneter, schienenförmiger Betätigungselemente 43, 44 bewirkt. Hierbei befindet sich das eine Betätigungselement 43 im Einlaufbereich 23 im Bereich der ersten Fördereinrichtung 11 und reicht nahezu bis an den Anfang der dritten Förderebene 18 heran, während das andere Betätigungselement 44 sich vom Übergansbereich des Rutschblechs 19 im Bereich des Auslaufbereichs 24 oberhalb der zweiten Fördereinrichtung 12 erstreckt.

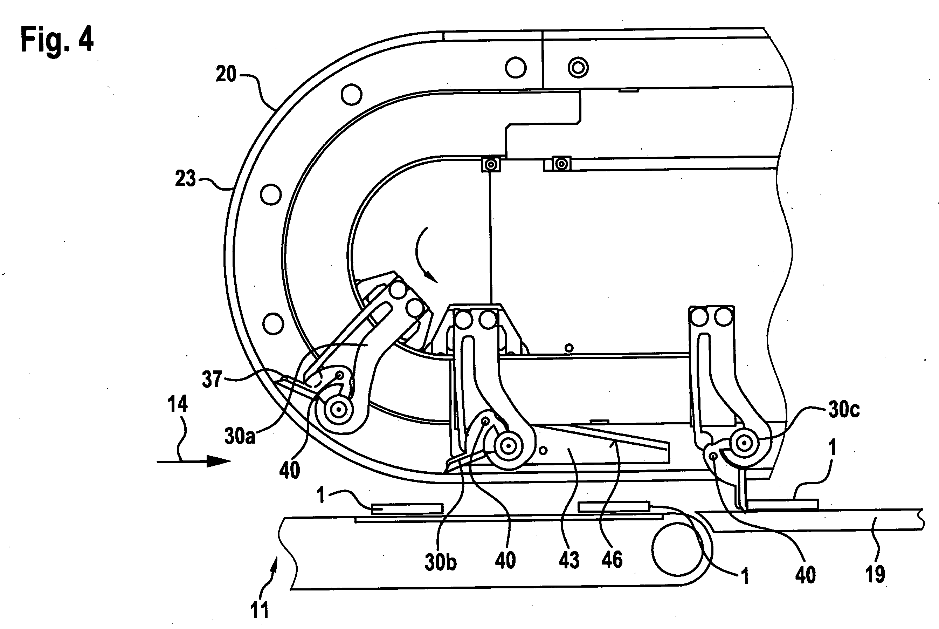

Wie insbesondere anhand der Fig. 4 und 5 erkennbar ist, sind die beiden Betätigungselemente 43, 44 jeweils derart ausgebildet, dass diese eine Führung 46, 47 für den Führungszapfen 40 eines Transportelements 30 ausbilden, sobald dieser in dem Bereich des jeweiligen Betätigungselements 43, 44 gelangt. Durch eine entsprechende Form bzw. Anordnung der Betätigungselemente 43, 44 wird eine gezielte Bewegung des Hebels 37 zur Übernahme eines Gegenstands 1 aus der ersten Fördereinrichtung 11 in den Bereich des Transfersystems 100 bzw. aus dem Transfersystem 100 in dem Bereich der zweiten Fördereinrichtung 15 erzielt.

Wie insbesondere anhand der Fig. 4 erkennbar ist, befindet sich der Hebel 37 bzw. seine Mitnehmerplatte 38 eines Förderelements 30a beim Durchlaufen des Einlaufbereichs 23 zunächst in seiner eingefahrenen Position. Wie man ferner anhand des Förderelements 30b erkennt, wird das Förderelement 30b im Endbereich der ersten Fördereinrichtung 11 vor dem Übergang an das Rutschblech 19 derart von der Steuereinrichtung des Transfersystems 100 bewegt, dass sich das Förderelement 30b zwischen zwei Gegenständen 1 befindet. Nahezu gleichzeitig gerät der Führungszapfen 40 des Förderelements 30b auch in Wirkverbindung mit dem ersten Betätigungselement 43, sodass der Hebel 37 in seine Mitnahmeposition zwischen zwei Gegenstände 1 geschwenkt wird. Insbesondere wird dabei das Förderelement 30b mit einem derartigen Geschwindigkeitsprofil bewegt, dass (bei ausgeklapptem Hebel 37) die Mitnehmerplatte 38 noch im Bereich der ersten Fördereinrichtung 11 in Anlagekontakt mit dem dem Förderelement 30b zugeordneten Gegenstand 1 gerät. Dies erfolgt vorzugsweise stoßfrei, wobei das Förderelement 30b im Übernahmezeitpunkt des Gegenstands 1 in etwa mit derselben Geschwindigkeit bewegt wird wie der Gegenstand 1 auf der ersten Fördereinrichtung 11, oder geringfügig schneller.

Bei dem Förderelement 30c befindet sich der Gegenstand 1 bereits auf dem Rutschblech 19 und wird von dem Förderelement 30c bevorzugt kontinuierlich bewegt, wobei entlang des Rutschblechs 19 auch eine Beschleunigung bzw. ein Verzögern des Gegenstands 1 erfolgen kann. Dies ist abhängig von der Fördergeschwindigkeit der zweiten Fördereinrichtung 12, oder aber, um die Abstände der Gegenstände 1 auf der nachfolgenden zweiten Fördereinrichtung 12 (im Vergleich zu den Abständen a auf der ersten Fördereinrichtung 11) zu verändern. Wesentlich dabei ist, dass im Übergabeort vom Rutschblech 19 an die zweite Fördereinrichtung 12 der Gegenstand 1 dieselbe Geschwindigkeit aufweist wie die zweite Fördereinrichtung 12.

Bei dem in der Fig. 5 dargestellten Auslaufbereich 24 des Transfersystems 100 werden die Gegenstände 1 bereits mittels der zweiten Fördereinrichtung 12 gefördert, wobei bei dem Förderelement 30d dessen Mitnahmeplatte 38 sich noch in Anlagekontakt mit dem Gegenstand 1 befindet. Im weiteren Verlauf gerät der Hebel 37 des Förderelements 30e in Wirkverbindung mit dem zweiten Betätigungselement 44, sodass der Hebel 37 zurückgeschwenkt wird, wodurch die Mitnahmeplatte 38 außer Kontakt mit dem entsprechenden Gegenstand 1 gerät. Es findet somit im Übergangsbereich zwischen dem Transfersystem 100 und der zweiten Fördereinrichtung 12 eine geführte Bewegung der jeweiligen Gegenstände 1 durch die Förderelemente 30d, 30e statt, die einen besonders produktschonenden Transport der Gegenstände 1 im Übergabebereich ermöglicht.

Das soweit beschriebene Transfersystem 100 kann in vielfältiger Art und Weise abgewandelt, bzw. modifiziert werden, ohne vom Erfindungsgedanken abzuweichen: Insbesondere ist auch denkbar, dass anstelle eines schwenkbaren Hebels 37 mit daran befestigter Mitnahmeplatte 38 zum Beispiel die Mitnahmeplatte auch an einem kolbenförmigen bzw. kolbenartigen Element befestigt ist, das über entsprechende Betätigungselemente aktiviert bzw. deaktiviert wird.

Weiterhin ist es denkbar, dass anstelle einer Rutschplatte 19 eine weitere, dritte Fördereinrichtung 50, zum Beispiel in Form eines endlosumlaufenden Förderbandes vorgesehen ist, auf der die Gegenstände 1 entlang gefördert werden. Diese Variante ist in der Fig. 1 gestrichelt dargestellt. Bei dieser Variante können die Betätigungselemente 43a, 44a auch (ausschließlich) im Bereich der dritten Fördereinrichtung 50 vorgesehen sein, so dass ein Auffahren bzw. ein Entfernen der Mitnehmerplatte 38 auf/von den Gegenständen 1 im Bereich der dritten Fördereinrichtung 50 erfolgt.

## Patentansprüche

1. Elektromagnetisches Transfersystem (100), mit einer vorzugsweise geschlossenen Trägerbahn (20), entlang der eine Vielzahl von individuell ansteuerbaren Induktionsspulen (25) angeordnet sind, mit an der Trägerbahn (20) beweglich angeordneten Förderelementen (30, 30a bis 30e) mit jeweils einem Mitnehmerelement (38), das zum Fördern von jeweils wenigstens einem Gegenstand (1) aus einer ersten Fördereinrichtung (11) entlang einer Förderstrecke (18) im Bereich des Transfersystems (100) in eine nachgeordnete zweite Fördereinrichtung (12) dient, wobei die Mitnehmerelemente (38) zumindest entlang der Förderstrecke (18) in Anlagekontakt mit dem wenigstens einen Gegenstand (1) sind, wobei das Förderelement (30, 30a bis 30e) als Antriebselement wenigstens ein, in Wirkverbindung mit den Induktionsspulen (25) angeordnetes Permanentmagnetelement (31) aufweist, wobei das Mitnehmerelement (38) am Förderelement (30, 30a bis 30e) zum in Anlagekontakt bringen und zum außer Anlagekontakt bringen mit dem wenigstens einen Gegenstand (1) beweglich angeordnet ist, und wobei die Bewegung des Mitnehmerelements (38) durch wenigstens ein an der Trägerbahn (20) ortsfest angeordnetes Betätigungselement (43; 43a, 44; 44a) erfolgt,
**dadurch gekennzeichnet,**
**dass** das Mitnehmerelement (38) schwenkbar am Förderelement (30, 30a bis 30e) angeordnet ist und ein Arretierelement aufweist, das das Mitnehmerelement (38) in einer Förderstellung hält, dass das Arretierelement als ein an einem Trägerelement (33) angeordnetes Federelement (41) ausgebildet ist, und dass das Trägerelement (33) als Formatteil ausgebildet ist und austauschbar an dem Förderelement (30, 30a bis 30e) angeordnet ist.

2. Transfersystem nach Anspruch 1,
**dadurch gekennzeichnet,**
**dass** das Betätigungselement (43; 43a, 44; 44a) schienenartig ausgebildet ist und zur Steuerung der Bewegung des Mitnehmerelements (38) eine Führung (46, 47) ausbildet, die mit einem zumindest mittelbar am Mitnehmerelement (38) angeordneten Führungszapfen (40) zusammenwirkt.

3. Transfersystem nach Anspruch 1 oder 2,
**dadurch gekennzeichnet,**
**dass** das Betätigungselement (43; 43a, 44; 44a) nur an den Bereichen der Trägerbahn (20) angeordnet ist, in denen eine Bewegung des Mitnehmerelements (38) erfolgt.

4. Transfersystem nach einem der Ansprüche 1 bis 3,
**dadurch gekennzeichnet,**
**dass** die Gegenstände (1) in Bereich der Transfereinrichtung (100) entlang einer geradlinig ausgebildeten Förderstrecke (18) gefördert werden, dass die Trägerbahn (20) einen bogenförmigen Einlaufbereich (23) und einen bogenförmigen Auslaufbereich (24) sowie einen geradlinig ausgebildeten, parallel zur Förderstrecke (18) angeordneten Trägerbahnabschnitt (21) aufweist, und dass das Betätigungselelement (43, 44) zumindest im Bereich des Einlaufbereichs (23) bzw. des Auslaufbereichs (24) angeordnet ist.

5. Transfersystem nach einem der Ansprüche 1 bis 4,
**dadurch gekennzeichnet,**
**dass** die Abstände zwischen den Gegenständen (1) im Bereich der Förderstrecke (18) durch eine Verzögerung oder eine Beschleunigung der Förderelemente (30, 30a bis 30e) gegenüber den Abständen (a) der Gegenstände (1) im Bereich der ersten Fördereinrichtung (11) verändert werden.

6. Transfersystem nach einem der Ansprüche 1 bis 3,
**dadurch gekennzeichnet,**
**dass** eine dritte Fördereinrichtung (50) zwischen den beiden Fördereinrichtungen (11, 12) vorgesehen ist, in deren Bereich die Mitnehmerelemente (38) lediglich bereichsweise in Anlagekontakt mit den Gegenständen (1) angeordnet sind.

7. Transfersystem nach Anspruch 6,
**dadurch gekennzeichnet,**
**dass** die Betätigungselemente (43a, 44a) im Bereich der dritten Fördereinrichtung (50) angeordnet sind.

8. Transfersystem nach einem der Ansprüche 1 bis 7,
**dadurch gekennzeichnet,**
**dass** das Federelement (41) als elastisch biegbares Federelement (41) ausgebildet ist, das am Trägerelement (33) angeformt ist.

9. Transfersystem nach einem der Ansprüche 1 bis 8,
**dadurch gekennzeichnet,**
**dass** das Trägeelement (33) zwei Aufnahmeöffnungen (35, 36) aufweist, die in Art eines Bajonett-Verschlusses der austauschbaren Befestigung des Trägerelements (33) am Förderelement (30) dienen.

## Claims

1. Electromagnetic transfer system (100) having a preferably closed carrier path (20), along which a multiplicity of individually activatable induction coils (25) are arranged, and having conveying elements (30, 30a to 30e), which are arranged such that they can move on the carrier path (20) and each have a driver element (38), which is used to convey in each case at least one article (1) from a first conveying device (11) along a conveying section (18) in the region of the transfer system (100) into a second conveying device (12) arranged downstream, the driver elements (38) being in touching contact with the at least one article (1), at least along the conveying section (18), the conveying element (30, 30a to 30e) having, as drive element, at least one permanent magnet element (31) arranged in operative connection with the induction coils (25), the driver element (38) being arranged on the conveying element (30, 30a to 30e) such that it can be moved to be brought into touching contact and out of touching contact with the at least one article (1), and the movement of the driver element (38) being carried out by means of at least one actuating element (43; 43a, 44; 44a) arranged at a fixed location on the carrier path (20),
**characterized in that**
the driver element (38) is arranged such that it can be pivoted on the conveying element (30, 30a to 30e) and has a locking element which keeps the driver element (38) in a conveying position, **in that** the locking element is formed as a spring element (41) arranged on a carrier element (33), and **in that** the carrier element (33) is formed as a format part and is arranged replaceably on the conveying element (30, 30a to 30e).

2. Transfer system according to Claim 1,
**characterized in that**
the actuating element (43; 43a, 44; 44a) is formed in the manner of a rail and, in order to control the movement of the driver element (38), forms a guide (46, 47) which interacts with a guide pin (40) arranged at least indirectly on the driver element (38).

3. Transfer system according to Claim 1 or 2,
**characterized in that**
the actuating element (43; 43a, 44; 44a) is arranged only in the regions of the carrier path (20) in which a movement of the driver element (38) takes place.

4. Transfer system according to one of Claims 1 to 3,
**characterized in that**
the articles (1) in the region of the transfer device (100) are conveyed along a rectilinearly formed conveying section (18), **in that** the carrier path (20) has a curved entry region (23) and a curved exit region (24) and a rectilinearly formed carrier path section (21) arranged parallel to the conveying section (18), and **in that** the actuating element (43, 44) is arranged at least in the region of the entry region (23) or the exit region (24).

5. Transfer system according to one of Claims 1 to 4,
**characterized in that**
the spacings between the articles (1) in the region of the conveying section (18) are changed with respect to the spacings (a) of the articles (1) in the region of the first conveying device (11) by means of a retardation or an acceleration of the conveying elements (30, 30a to 30e).

6. Transfer system according to one of Claims 1 to 3,
**characterized in that**
a third conveying device (50), in the region of which the driver elements (38) are arranged in touching contact with the articles (1) only in some regions, is provided between the two conveying devices (11, 12).

7. Transfer system according to Claim 6,
**characterized in that**
the actuating elements (43a, 44a) are arranged in the region of the third conveying device (50).

8. Transfer system according to one of Claims 1 to 7,
**characterized in that**
the spring element (41) is formed as an elastically flexible spring element (41) which is integrally molded on the carrier element (33).

9. Transfer system according to one of Claims 1 to 8,
**characterized in that**
the carrier element (33) has two receiving openings (35, 36) which serve in the manner of a bayonet fixing for the replaceable fixing of the carrier element (33) on the conveying element (30).

## Revendications

1. Système de transfert électromagnétique (100), avec une bande de support (20) de préférence fermée le long de laquelle une pluralité de bobines d'induction (25) pouvant être commandées individuellement sont disposées, avec des éléments de transport (30, 30a à 30e) disposés de façon mobile au niveau de la bande de support (20) avec respectivement un élément d'accouplement (38) servant à transporter respectivement au moins un objet (1) hors d'un premier dispositif de transport (11) situé le long d'un tronçon de transport (18) dans la région du système de transfert (100) jusque dans un deuxième dispositif de transport (12) placé en aval, les éléments d'accouplement (38) étant en contact d'appui avec l'au moins un objet (1) au moins le long du tronçon de transport (18), l'élément de transport (30, 30a à 30e) servant d'élément d'entraînement comportant au moins un élément à aimant permanent (31) disposé en liaison active avec les bobines d'induction (25), l'élément d'accouplement (38) étant disposé de façon mobile au niveau de l'élément de transport (30, 30a à 30e) pour être mis en contact d'appui et hors de contact d'appui avec l'au moins un objet (1) et le mouvement de l'élément d'accouplement (38) se produisant au travers d'au moins un élément d'actionnement (43 ; 43a, 44 ; 44a) disposé fixement sur place au niveau de la bande de support (20), **caractérisé en ce que** l'élément d'accouplement (38) est disposé de façon à pouvoir pivoter au niveau de l'élément de transport (30, 30a à 30e) et comporte un élément d'arrêt maintenant l'élément d'accouplement (38) dans une position de transport, que l'élément d'arrêt est réalisé sous la forme d'un élément à ressort (41) disposé au niveau d'un élément de support (33) et que l'élément de support (33) est réalisé sous la forme d'une pièce formatée et disposé de façon interchangeable au niveau de l'élément de transport (30, 30a à 30e).

2. Système de transfert selon la revendication 1, **caractérisé en ce que** l'élément d'actionnement (43 ; 43a, 44 ; 44a) est réalisé à la façon d'un rail et forme un guide (46, 47) pour commander le mouvement de l'élément d'accouplement (38) interagissant avec un tenon de guidage (40) disposé au moins indirectement au niveau de l'élément d'accouplement (38).

3. Système de transfert selon la revendication 1 ou 2, **caractérisé en ce que** l'élément d'actionnement (43 ; 43a, 44 ; 44a) n'est disposé qu'au niveau des régions de la bande de support (20) dans lesquelles un mouvement de l'élément d'accouplement (38) se produit.

4. Système de transfert selon l'une quelconque des revendications 1 à 3, **caractérisé en ce que** les objets (1) sont transportés dans la région du dispositif de transfert (100) le long d'un tronçon de transport (18) réalisé en ligne droite, que la bande de support (20) comporte une région d'entrée (23) en forme d'arc et une région de sortie (24) en forme d'arc ainsi qu'une section de bande de support (21) réalisée en ligne droite, disposée parallèlement au tronçon de transport (18) et que l'élément d'actionnement (43, 44) est disposé au moins dans la région de la région d'entrée (23) et/ou de la région de sortie (24).

5. Système de transfert selon l'une quelconque des revendications 1 à 4, **caractérisé en ce que** les écartements entre les objets (1) dans la région du tronçon de transport (18) sont modifiés par un ralentissement ou une accélération des éléments de transport (30, 30a à 30e) par rapport aux écartements (a) des objets (1) dans la région du premier dispositif de transport (11).

6. Système de transfert selon l'une quelconque des revendications 1 à 3, **caractérisé en ce qu'**un troisième dispositif de transport (50) est prévu entre les deux dispositifs de transport (11, 12), les éléments d'accouplement (38) étant disposés seulement en partie en contact d'appui avec les objets (1) dans la région dudit troisième dispositif.

7. Système de transfert selon la revendication 6, **caractérisé en ce que** les éléments d'actionnement (43a, 44a) sont disposés dans la région du troisième dispositif de transport (50).

8. Système de transfert selon l'une quelconque des revendications 1 à 7, **caractérisé en ce que** l'élément à ressort (41) est réalisé sous la forme d'un élément à ressort (41) à flexion élastique formé au niveau de l'élément de support (33).

9. Système de transfert selon l'une quelconque des revendications 1 à 8, **caractérisé en ce que** l'élément de support (33) comporte deux ouvertures de réception (35, 36) servant, à la façon d'une fermeture à baïonnette, à la fixation interchangeable de l'élément de support (33) à l'élément de transport (30).
